(19) Europäisches Patentamt
European Patent Office
Office européen des brevets

(11) EP 2 776 380 B1

(12) EUROPEAN PATENT SPECIFICATION

(45) Date of publication and mention
of the grant of the patent:
**16.09.2015 Bulletin 2015/38**

(51) Int Cl.:
*C04B 35/119* (2006.01)   *C04B 35/488* (2006.01)
*C23C 14/06* (2006.01)   *F01D 5/28* (2006.01)

(21) Application number: **12781103.2**

(22) Date of filing: **05.11.2012**

(86) International application number:
**PCT/EP2012/071839**

(87) International publication number:
**WO 2013/068315 (16.05.2013 Gazette 2013/20)**

(54) **HIGH TEMPERATURE THERMAL BARRIER COATING**

HOCHTEMPERATUR-WÄRMEDÄMMSCHICHT

REVÊTEMENT BARRIÈRE THERMIQUE À HAUTE TEMPÉRATURE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.11.2011 CH 18002011**

(43) Date of publication of application:
**17.09.2014 Bulletin 2014/38**

(73) Proprietors:
• **ALSTOM Technology Ltd
5400 Baden (CH)**
• **Eidgenössische Technische Hochschule Zürich
8092 Zürich (CH)**

(72) Inventors:
• **WITZ, Gregoire Etiennne
CH-5413 Birmenstorf (CH)**
• **BOSSMANN, Hans-Peter
79787 Lauchringen (DE)**
• **BHATTACHARYA, Anup Kumar
Mumbai 410210 (IN)**
• **SHKLOVER, Valery
CH-8053 Zürich (CH)**

(74) Representative: **Alstom Technology Ltd
CHTI Intellectual Property
Brown Boveri Strasse 7
5400 Baden (CH)**

(56) References cited:
EP-A1- 1 295 969   EP-A2- 1 318 215
US-A1- 2002 172 837   US-A1- 2005 153 158
US-A1- 2006 046 090   US-B1- 6 258 467

## Description

BACKGROUND OF THE INVENTION

The present invention relates to the technology of high-temperature components for thermal machines, especially for gas turbines. It refers to a high temperature thermal barrier coating according to the preamble of claim 1.

PRIOR ART

Advancements in the technology of gas turbines depend mainly on the development of advanced materials for its components, especially blades, vanes, heat shields or combustor liners. On the other hand, a growth in the gas turbine market can be made compatible with the goals of the Kyoto Protocol by increasing the efficiency of gas turbine plants and working towards $CO_2$ caption and storage (which will reduce the overall plant efficiency). Increase of efficiency can be achieved either by reduction of cooling for turbine blades and combustor liners or by increasing firing temperature.

In the past, it has been shown that Thermal Barrier Coatings (TBCs) of the blades or other components prepared with Yttria Stabilized Zirconia (YSZ) reached the intrinsic limits of the material. An increase of operating temperature can be obtained by either incorporating new stabilizing elements to zirconia or by using new protection materials. The goal is a new generation of gas turbines which require TBCs being able to withstand temperatures around 1400 °C during more than 20'000 hours. These high operating temperatures require new coating solutions.

In the prior art, an increase of the high temperature stability of zirconia by stabilizing it with two or more oxides has been proposed (see for example documents US 7,087,266, US 7,060,365, US 6,960,395, US 6,890,668 and US 2006/0046090), or entrapping stabilizing carbon or a carbon containing gas in the pores (see documents US 6,998,172 or US 2005/0126494), or providing an alumina containing environmental barrier in the upper layer (see documents US 7,008,674 and US 6,893,750), or compounds having a rhombohedral phase (see documents US 2006/0121294 and US 2006/0121293) or a cubic zirconia phase (see documents US 6,887,595 and US 2005/0170200).

Others are working on improving the thermal stability of zirconia by incorporating high amounts of ytterbia or yttria (see document US 6,946,208 or US 6,930,066), or on alumina containing top layer providing an environmental barrier (see document US 6,929,852), or on new oxides having a pyrochlore structure (see documents US 6,835,465, US 6,387,539, US 6,387,526, US 6,365,281, US 2006/0286401 and US 2006/0245984).

Further work is done on increasing the stability of zirconia by mixing it with Er203 (see document US 6,916,551), on $Re_xZr_{1-x}, C_y$, (see documents US 7,041,383 and US 6,803,135). Document US 7,001,859 relates to work on zirconia stabilized with a primary stabilizer together with two cluster-forming dopants.

Since YSZ stabilized with 6-8 weight percent of yttria decomposition kinetic becomes significant at temperatures > 1200°C it cannot operate for extended operating intervals with surface temperatures above 1200°C. There are numerous materials that can theoretically withstand surface temperatures up to 1400°C. But up to now no one has been fully proven to be suited for use in TBC, mostly because their chemical stability in combustion environment, thermo-mechanical compatibility and chemical stability with other TBC constituents are only partially understood.

SUMMARY OF THE INVENTION

It is an object of the present invention to provide a high-temperature thermal barrier coating (HT-TBC), especially for gas turbine blades, capable to withstand the operation at around 1400°C during 20'000 h and having a thermal conductivity (TC) $\kappa < 2$ W/mK for the temperature range 1000°C-1400°C of the TBC system.

It is another object of the invention to provide a component for a thermal machine being protected by such a HT-TBC.

This and other objects are obtained by a coating according to claim 1.

The high temperature thermal barrier coating for the protection of thermally loaded components of a thermal machine, especially a gas turbine, consists of a stabilized $ZrO_2$ composition. It is characterized in that said composition is stabilized with at least 15 mol% $Y_{1+v}Ta_{1-v}O_{4-v}$, the $ZrO_2$ is partially substituted by at least 10 mol% $HfO_2$ and the composition is established according to the formula

$$(Y_{1+v}Ta_{1-v}O_{4-v})_z(Zr_{1-x}Hf_xO_2)_{1-z} \, ,$$

with x ranging from 0.1 to 0.5, $v$ ranging from -0.1 to 0.2 and z ranging from 0.15 to 0.25.

Especially, x will range from 0.15 to 0.25, v will range from 0 to 0.1 and z will range from 0.18 to 0.23.

According to another embodiment of the invention the high temperature thermal barrier coating covers a component made of a base alloy.

According to another embodiment of the invention a bondcoat is provided between the base alloy of the component and the high temperature thermal barrier coating.

Especially, the bondcoat consists of MCrAlYX, where M= Ni, Co or Fe or a mixture thereof and X= Si, Ta, B, Ca or Mg or a mixture thereof, and said bondcoat is deposited by a thermal spray process.

According to another embodiment of the invention an intermediate layer is provided between the bondcoat and the high temperature thermal barrier coating.

Especially, the intermediate layer consists of 7YSZ deposited by a thermal spray process.

According to another embodiment of the invention the high temperature thermal barrier coating is deposited by a thermal spray process.

## BRIEF DESCRIPTION OF THE DRAWINGS

The present invention is now to be explained more closely by means of different embodiments and with reference to the attached drawings.

Fig. 1    shows X-ray diffraction curves (intensity dependant on diffraction angle $2\theta$) for $(YTaO_4)_{0.2}(Zr_{1-x}Hf_x)_{0.8}$ treated at 1500°C for 4 h with different x-values;

Fig. 2    shows a section of a thermally protected component according to an embodiment of the invention; and

Fig. 3    shows a section of a thermally protected component according to another embodiment of the invention.

## DETAILED DESCRIPTION OF DIFFERENT EMBODIMENTS OF THE INVENTION

The invention is intended at providing a thermal barrier coating material and system thermodynamically stable at temperatures up to >1400°C. The material is a tetragonal stabilized material which is stable at high temperature and has a high toughness value. Most of the high temperature stable zirconia have a cubic structure not allowing them to have a high toughness due to the absence of ferroelasticity in the cubic system.

Thermal barrier coating systems made of 6-8 wt% $Y_2O_3$ stabilized $ZrO_2$ (7YSZ) are not suited for use at temperatures above 1300°C due to the decomposition of the metastable tetragonal phase into cubic, and low $Y_2O_3$ content zirconia which transforms into monoclinic upon cooling. The monoclinic to tetragonal transformation leads to a volume change and will thus reduce the life of the coating. Fully stabilized zirconia systems have been considered as TBC material, but they have not the high toughness that has tetragonal 7YSZ, due to the absence of a ferroelastic mechanism. For this reason a stable tetragonal zirconia composition is highly desirable.

$ZrO_2$ stabilized with $YTaO_4$ has been proposed as a TBC material having a tetragonal unit cell and being stable at high temperature. The present invention proposes a $ZrO_2$ composition stabilized with $YTaO_4$ where $ZrO_2$ is partially substituted by $HfO_2$, bringing two advantages:

1. increased tetragonality leading to an increase of fracture toughness; and
2. an increased density of scattering centres for phonon diffusion, leading to a reduction of thermal conductivity.

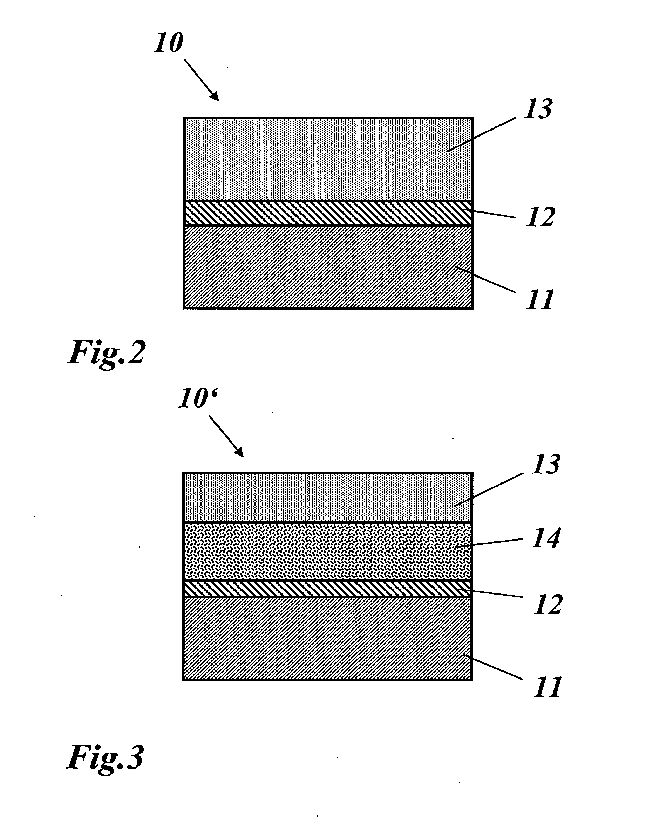

The HT-TBC of the invention can be applied as a single layer ceramic layer directly on the bondcoat (see Fig. 2), or as a dual layer system where 7YSZ is deposited as an intermediate layer on the bondcoat and the new HT-TBC material is deposited on the 7YSZ layer (see Fig. 3). High temperature annealing of the proposed material composition shows no decomposition at 1500°C after 4 hours of annealing, a condition where a 7YSZ system will be fully decomposed.

Fig. 2 shows a section of a component according to an embodiment of the invention, the component 10 being made of a base alloy 11, which is covered by a bondcoat 12, the bondcoat 12 being directly covered by a HT-TBC 13 according to the invention.

Fig. 3 shows a section of a component according to another embodiment of the invention, the component 10' being made of a base alloy 11, which is covered by a bondcoat 12, the bondcoat 12 being covered by a HT-TBC 13 according to the invention with an intermediate layer 14 being provided between the bondcoat 12 and the HT-TBC 13.

An embodiment of the thermal barrier coating according to the invention comprises an MCrAlYX bondcoat (with M= Ni, Co or Fe or a mixture thereof and X= Si, Ta, B, Ca or Mg or a mixture thereof) deposited by a thermal spray process, a HT-TBC layer deposited by a thermal spray process composed of $(Zr_{1-x}Hf_x)O_2$ doped with 15-25 mol% of $YTaO_4$, x ranging from 0.1 to 0.5, and possibly an intermediate layer of 7YSZ deposited by thermal spray separating the bondcoat from the HT-TBC layer.

The TaYSZH system has the following compositions:

1. 20 mol% YTaO$_4$ in (Zr$_{1-x}$Hf$_x$)O$_2$ with x =10% to 25%
2. 20 mol% YTaO$_4$ in (Zr$_{1-x}$Hf$_x$)O$_2$ with x = 50%

Synthesis is done by reverse co-precipitation with NH$_4$OH as precipitating agent.

The results are :

1. Single tetragonal phase from composition 1.
2. Single tetragonal phase + 0.48 mol% m-ZrO$_2$ from composition 2
3. Single tetragonal phase was stable at 1500°C for 4 h
4. Tetragonality increases with increasing Hf content

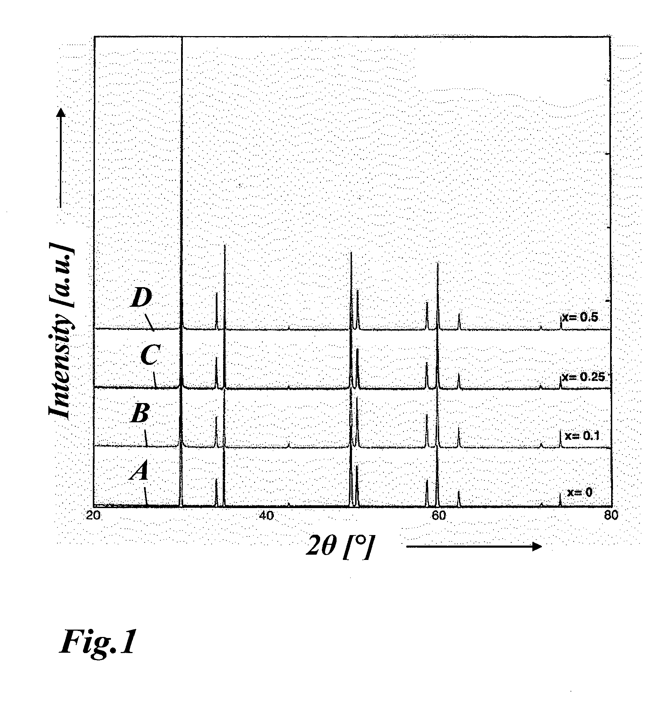

Fig. 1 shows X-ray diffraction curves (intensity dependant on diffraction angle 2θ) for a 20 mol% YTaO$_4$ (Zr$_{1-x}$Hf$_x$) treated at 1500°C for 4 h with x-values of x=0 (curve A), x=0.1 (curve B), x=0.25 (curve C) and x=0.5 (curve D).

The general composition of the new coating material is

$$(Y_{1+v}Ta_{1-v}O_{4-v})_z(Zr_{1-x}Hf_xO_2)_{1-z}$$

with x ranging from 0.1 to 0.5, v ranging from -0.1 to 0.2 and z ranging from 0.15 to 0.25. Preferably, x will range from 0.15 to 0.25, v will range from 0 to 0.1 and z will range from 0.18 to 0.23.

The thermal barrier coating according to the invention is intended to be used for providing a thermal protection to hot parts of thermal machines, especially gas turbines, like blades, vanes, heat shields, burners or combustor liners. It gives the advantage of increasing the temperature capability of current thermal barrier coating systems by:

1. reduced decomposition kinetic compared to currently Yttria Stabilized Zirconia YSZ, which decomposes into a cubic and monoclinic phase upon long term exposure at high temperatures; the proposed compositions show very little decomposition at temperatures up to at least 1500°C, whereas current TBC are already significantly decomposed after few hundred hours at temperatures as low as 1200°C.
2. the increased tetragonality of the system brings an improvement in fracture toughness of the material; this allows to reduce crack growth in the ceramic upon thermal cycling.

LIST OF REFERENCE NUMERALS

10,10'   component
11       base alloy
12       bondcoat
13       HT-TBC layer
14       intermediate layer
A-B      x-ray diffraction curve

**Claims**

1.  High temperature thermal barrier coating for the protection of thermally loaded components (10, 10') of a thermal machine, especially a gas turbine, said thermal barrier coating consists of a stabilized ZrO$_2$ composition, **characterized in that** said composition is stabilized with at least 15 mol% Y$_{1+v}$Ta$_{1-v}$O$_{4-v}$, the ZrO$_2$ is partially substituted by at least 10 mol% HfO$_2$ and the composition is a stable tetragonal zirconia composition, which is established according to the formula

$$(Y_{1+v}Ta_{1-v}O_{4-v})_z(Zr_{1-x}Hf_xO_2)_{1-z},$$

with x ranging from 0.1 to 0.5, v ranging from -0.1 to 0.2 and z ranging from 0,15 to 025.

**2.** High temperature thermal barrier coating according to claim 1, **characterized in that** x will range from 0.15 to 0.25, v will range from 0 to 0.1 and z will range from 0.18 to 0.23.

**3.** High temperature thermal barrier coating according to one of the claims 1-2, **characterized in that** the high temperature thermal barrier coating (13) covers a component (10, 10') made of a base alloy (11).

**4.** High temperature thermal barrier coating according to claim 3, **characterized in that** a bondcoat (12) is provided between the base alloy (11) of the component (10, 10') and the high temperature thermal barrier coating (13).

**5.** High temperature thermal barrier coating according to claim 4, **characterized in that** the bondcoat (12) consists of MCrAlYX, where M= Ni, Co or Fe or a mixture thereof and X= Si, Ta, B, Ca or Mg or a mixture thereof, and said bondcoat (12) is deposited by a thermal spray process.

**6.** High temperature thermal barrier coating according to claim 4 or 5, **characterized in that** an intermediate layer (14) is provided between the bondcoat (12) and the high temperature thermal barrier coating (13).

**7.** High temperature thermal barrier coating according to claim 6, **characterized in that** the intermediate layer (14) consists of 7YSZ deposited by a thermal spray process.

**8.** High temperature thermal barrier coating according to one of the claims 3-7, **characterized in that** the high temperature thermal barrier coating (13) is deposited by a thermal spray process.

**Patentansprüche**

**1.** Hochtemperatur-Wärmedämmmschicht zum Schutz von thermisch beanspruchten Komponenten (10,10') einer thermischen Maschine, insbesondere einer Gasturbine, wobei die Wärmedämmmschicht aus einer stabilisierten $ZrO_2$-Zusammensetzung besteht, **dadurch gekennzeichnet, dass** die Zusammensetzung mit mindestens 15 Mole $Y_{1+v}Ta_{1-v}O_{4-v}$ stabilisiert ist, das $ZrO_2$ teilweise durch mindestens 10 Mol-% $HfO_2$ substituiert ist und die Zusammensetzung eine beständige tetragonale Zirconiumdioxidzusammensetzung ist, die der Formel

$$(Y_{1+v}Ta_{1-v}O_{4-v})_z (Zr_{1-x}Hf_xO_2)_{1-z}$$

gemäß aufgestellt ist, wobei x im Bereich von 0,1 bis 0,5 liegt, v im Bereich von -0,1 bis 0,2 liegt und z im Bereich von 0,15 bis 0,25 liegt.

**2.** Hochtemperatur-Wärmedämmmschicht nach Anspruch 1, **dadurch gekennzeichnet, dass** x im Bereich von 0,15 bis 0,25 liegt, v im Bereich von 0 bis 0,1 liegt und z im Bereich von 0,18 bis 0,23 liegt.

**3.** Hochtemperatur-Wärmedämmmschicht nach einem der Ansprüche 1 - 2, **dadurch gekennzeichnet, dass** die Hochtemperatur-Wärmedämmmschicht (13) eine Komponente (10, 10') bedeckt, die aus einer Basis-Legierung (11) hergestellt ist.

**4.** Hochtemperatur-Wärmedämmmschicht nach Anspruch 3, **dadurch gekennzeichnet, dass** eine Haftschicht (12) zwischen der Basis- Legierung (11) der Komponente (10, 10') und der Hochtemperatur-Wärmedämmmschicht (13) bereitgestellt wird.

**5.** Hochtemperatur-Wärmedämmmschicht nach Anspruch 4, **dadurch gekennzeichnet, dass** die Haftschicht (12) aus MCrAlYX besteht, wobei M = Ni, Co oder Fe oder eine Mischung davon ist und X = Si, Ta, B, Ca oder Mg oder eine Mischung davon ist und wobei die Haftschicht (12) durch ein thermisches Spritzverfahren aufgebracht wird.

**6.** Hochtemperatur-Wärmedämmmschicht nach Anspruch 4 oder 5, **dadurch gekennzeichnet, dass** eine Zwischenschicht (14) zwischen der Haftschicht (12) und der Hochtemperatur-Wärmedämmmschicht (13) bereitgestellt wird.

**7.** Hochtemperatur-Wärmedämmmschicht nach Anspruch 6, **dadurch gekennzeichnet, dass** die Zwischenschicht (14) aus 7YSZ besteht, das durch ein thermisches Spritzverfahren aufgebracht wird.

8. Hochtemperatur-Wärmedämmmschicht nach einem der Ansprüche 3 - 7, **dadurch gekennzeichnet, dass** die Hochtemperatur-Wärmedämmmschicht (13) durch ein thermisches Spritzverfahren aufgebracht wird.

**Revendications**

1. Revêtement de barrière thermique à haute température pour la protection de composants chargés thermiquement (10, 10') d'une machine thermique, en particulier une turbine à gaz, ledit revêtement de barrière thermique consistant en une composition de $ZrO_2$ stabilisée, **caractérisé en ce que** ladite composition est stabilisée avec au moins 15 % en moles de $Y_{1+\nu}Ta_{1-\nu}O_{4-\nu}$, le $ZrO_2$ est partiellement remplacé par au moins 10 % en moles de $HfO_2$ et la composition est une composition de zircone quadratique stable, qui est établie selon la formule

$$(Y_{1+\nu}Ta_{1-\nu}O_{4-\nu})_z (Zr_{1-x}Hf_xO_2)_{1-z},$$

avec x allant de 0,1 à 0,5, $\nu$ allant de -0,1 à 0,2 et z allant de 0,15 à 0,25.

2. Revêtement de barrière thermique à haute température selon la revendication 1, **caractérisé en ce que** x ira de 0,15 à 0,25, $\nu$ ira de 0 à 0,1 et z ira de 0,18 à 0,23.

3. Revêtement de barrière thermique à haute température selon une des revendications 1 et 2, **caractérisé en ce que** le revêtement de barrière thermique à haute température (13) recouvre un composant (10, 10') fait d'un alliage de base (11).

4. Revêtement de barrière thermique à haute température selon la revendication 3, **caractérisé en ce qu'**une couche d'accrochage (12) est disposée entre l'alliage de base (11) du composant (10, 10') et le revêtement de barrière thermique à haute température (13).

5. Revêtement de barrière thermique à haute température selon la revendication 4, **caractérisé en ce que** la couche d'accrochage (12) consiste en du MCrAlYX, où M = Ni, Co ou Fe ou un mélange de ceux-ci et X = Si, Ta, B, Ca ou Mg ou un mélange de ceux-ci, et ladite couche d'accrochage (12) est déposée par un procédé de projection thermique.

6. Revêtement de barrière thermique à haute température selon la revendication 4 ou 5, **caractérisé en ce qu'**une couche intermédiaire (14) est disposée entre la couche d'accrochage (12) et le revêtement de barrière thermique à haute température (13).

7. Revêtement de barrière thermique à haute température selon la revendication 6, **caractérisé en ce que** la couche intermédiaire (14) consiste en du 7YSZ déposé par un procédé de projection thermique.

8. Revêtement de barrière thermique à haute température selon une des revendications 3 à 7, **caractérisé en ce que** le revêtement de barrière thermique à haute température (13) est déposé par un procédé de projection thermique.

*Fig.1*

Fig.2

Fig.3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7087266 B
- US 7060365 B
- US 6960395 B
- US 6890668 B
- US 20060046090 A
- US 6998172 B
- US 20050126494 A
- US 7008674 B
- US 6893750 B
- US 20060121294 A
- US 20060121293 A
- US 6887595 B
- US 20050170200 A
- US 6946208 B
- US 6930066 B
- US 6929852 B
- US 6835465 B
- US 6387539 B
- US 6387526 B
- US 6365281 B
- US 20060286401 A
- US 20060245984 A
- US 6916551 B
- US 7041383 B
- US 6803135 B
- US 7001859 B